# EUROPÄISCHE PATENTANMELDUNG

(11) **EP 1 139 000 A2**
(43) Veröffentlichungstag der Anmeldung: **04.10.2001**
(21) Anmeldenummer: 01106643.8
(22) Anmeldetag: 16.03.2001
(51) Int. Cl.: F16L 23/00

(54) **Anschlussflanschstück für Prozessanlagen**

(30) Priorität: 01.04.2000 DE 10016436
(71) Anmelder: RUHR OEL GmbH, 45896 Gelsenkirchen (DE)
(72) Erfinder: Paluda, Martin, 45701 Herten (DE)

(57) **Zusammenfassung**

Gegenstand der Erfindung ist ein Anschlußflanschstück für Prozeßanlagen bestehend aus einem Flansch (1), einem Rohrstück (2), das mit dem einen Ende am Flansch (1) befestigt ist, und einem Befestigungsmittel (3), das an dem anderen Ende des Rohrstückes (2) angeordnet ist, zur paßgenauen Befestigung von Adapterstücken mit unterschiedlicher Funktion.

## Beschreibung

Gegenstand der Erfindung ist ein Anschlußflanschstück für Prozeßanlagen bestehend aus einem Flansch, einem Rohrstück und einem Befestigungsmittel am Rohrstück.

Derartige Anschlußflanschstücke werden insbesondere für Prozeßanlagen in der Chemie-, Mineralöl- und Petrochemieindustrie benötigt.

Bei der Wartung dieser Anlagen ist es häufig notwendig, Pumpen, Verdichter, Behälter, Filter oder Rohrleitungen mit Stickstoff, Wasser, Dampf oder Luft zu spülen, zu reinigen, zu entleeren oder auch auf Druck zu bringen. Bei herkömmlichen Prozeßanlagen sind hierzu entsprechende Blindflansche vorhanden, die im Falle der Wartung demontiert werden müssen. Anschließend werden Bajonettanschlüsse in verschiedenen Flanschgrößen montiert, um dann die jeweiligen Ansatzstükke, die für die weitere Wartung der Anlage notwendig sind, wie beispielsweise Dampf/Wasser/Luft-Adapterstücke oder Stickstoff-Adapterstücke anzubringen. Bei diesen Arbeiten ist es weiterhin notwendig, auch die vorhandenen Isolierungen zu demontieren und eventuell vorhandene elektrische Begleitheizungen freizuschalten und zu entfernen. Nach Abschluß der Wartungsarbeiten werden alle diese Maßnahmen rückgängig gemacht und die entsprechenden Blinddeckel wieder angebracht, um die Dichtheit des Systems zu gewährleisten.

Da derartige Wartungsarbeiten an Prozeßanlagen in großem Ausmaß notwendig sind und eine Vielzahl von entsprechenden Blindflanschen für diese Wartungsarbeiten vorhanden sind, ist es notwendig, im Zuge von Reparaturen, Wartungsarbeiten oder Revisionsarbeiten mehrere Hundert dieser Anschlüsse mit den entsprechenden Flansch- oder Bajonettanschlüssen auszustatten und diese nach den Arbeiten wieder zu entfernen. Im Normalbetrieb werden diese Anschlüsse beispielsweise zur Spülung einzelner Anlagenbestandteile im Jahresverlauf mehrfach montiert und wieder demontiert. Weiterhin treten die Probleme auf, daß bei gleichzeitigen Wartungsarbeiten an verschiedenen Arbeitsstellen unter Umständen Wartezeiten dadurch entstehen, daß die notwendigen Adapterstücke nicht zur Verfügung stehen, weil sie anderweitig eingesetzt werden.

Die technische Aufgabe der Erfindung ist es daher, ein universell verwendbares Anschlußflanschstück zur Verfügung zu stellen, das die oben stehenden Nachteile nicht besitzt, universell für alle Arten von Adapterstücken einsetzbar ist und nach den Wartungsarbeiten nicht mehr entfernt werden muß.

Diese Aufgabe wird durch ein universelles Anschlußflanschstück gelöst, bestehend aus einem Flansch, einem Rohrstück, das mit dem einen Ende am Flansch befestigt ist und einem Befestigungsmittel, das an dem anderen Ende des Rohrstückes angeordnet ist, zur paßgenauen Befestigung von Adapterstücken mit unterschiedlicher Funktion.

Durch diese Maßnahme wird erreicht, daß an den obligatorischen Stellen der Prozeßanlage, an denen öfter solche Arbeiten stattfinden, entsprechende Anschlußflanschstücke nur einmal montiert werden müssen. Diese können dann bei Wartungsarbeiten ständig benutzt werden. Hierdurch entfallen die bisher üblichen Arbeiten im Zusammenhang mit dem jeweiligen Anbringen der Flanschstücke und dem Entfernen bei jeder einzelnen Wartung.

In einer bevorzugten Ausführungsform wird das Ende des Rohrstückes am Flansch eingeschweißt. Zur Befestigung der Adapterstücke ist an dem anderen Ende des Rohrstückes eine Überwurfmutter mit Schneidring als Befestigungsmittel in bevorzugter Ausführungsform angeordnet.

Als Adapterstücke an dem anderen Ende des Rohrstückes können Dampf/Wasser-/Luft-Adapter, Stickstoff-Adapter oder Blindstopfen eingesetzt werden. Die Anschlußflanschstücke werden mit Blindstopfen versehen solange sie nicht zu Wartungsarbeiten benötigt werden. Hier werden bevorzugt Blindstopfen der Firma Ermeto eingesetzt. Bei entsprechenden Wartungsarbeiten werden die Blindstopfen entfernt und die für die Wartungsarbeiten notwendigen Adapterstücke aufgesetzt. Auch hier werden bevorzugt Adapterstücke der Firma Ermeto eingesetzt.

### Eine vorteilhafte Ausgestaltung der Erfindung wird nachfolgend beschrieben:

An den obligatorischen Stellen der Prozeßanlage, an denen öfter solche Arbeiten stattfinden, wurden entsprechend vorher angefertigte Flansche mit eingeschweißten Rohrstücken und Überwurfmutter mit Schneidringen montiert. Die Montagestellen wurden anschließend wieder in den Urzustand versetzt, d.h., in die Isolierung wurde ein Loch in entsprechender Größe geschnitten, aus dem das Rohrende mit der Überwurfmutter herausragte. An diesem wurde für die Zeit bis zur Nutzung ein Blindstopfen montiert, um die Stelle in einen abgeschlossen Zustand zu versetzen. Die vorgenannten Arbeiten und deren Kosten sind einmalige, vorbereitende Arbeiten, die nicht bei jeder Wartung anfallen, sondern nur einmal vorgenommen werden müssen.

Wenn entsprechende Wartungsarbeiten an der Stelle notwendig sind, wird der Blindstopfen entfernt und das jeweils nötige, vorher angefertigte Adapterstück montiert. Hierzu sind lediglich zwei Maulschlüssel notwendig und der Zeitaufwand beträgt nur etwa 30 Sekunden. Diese Arbeit kann beispielsweise vom Betriebspersonal erledigt werden, da hier keine speziellen Fertigkeiten notwendig sind. Mehrere Arbeitsgänge, wie Abisolieren, elektrische Begleitheizungen freischalten/entfernen, Blinddeckel demontieren, Spülanschlußdeckel montieren mit Dichtungs-/Schraubenwechsel, Blinddeckelmontage, elektrische Begleitheizung montieren/einschalten und Aufisolieren der Stelle sowie die Koordination und der höhere Zeitaufwand diese Arbeiten entfallen hierdurch. Nach Ende der Wartung muß dann lediglich das Adapterstück demontiert und der Blindstopfen montiert werden.

Als Anschlußflansch wird ein Flansch in entsprechender Nennweite (z.B. Rohrstück Ermeto, d = 22 mm, Länge 200 - 300 mm) und eine Überwurfmutter in EO 22 mm mit Schneidring verwendet. Es wird dann ein 22 mm Loch in den Flansch gebohrt, das Rohr in den Flansch eingeschweißt und die Überwurfmutter mit Schneidring am Rohrende befestigt. Als Adapterstücke können Adapterstücke mit entsprechendem Bajonettanschluß für Stickstoff/Dampf/Wasser/Luft mit einem ¾ Zoll Rohr-Innengewinde eingesetzt werden. Weiterhin werden bevorzugt gerade Einschraubverschraubung 22 mm auf ¾ Zoll Rohr-Innengewinde, Teflonband zur Abdichtung und Blindstopfen, ebenfalls der Größe 22 mm eingesetzt. Der Bajonettanschluß wird dann mit der geraden Einschraubverschraubung verschraubt und so entsprechende Adapterstücke gefertigt.

Ausführungsbeispiele der Erfindung sind in den Zeichnungen dargestellt.

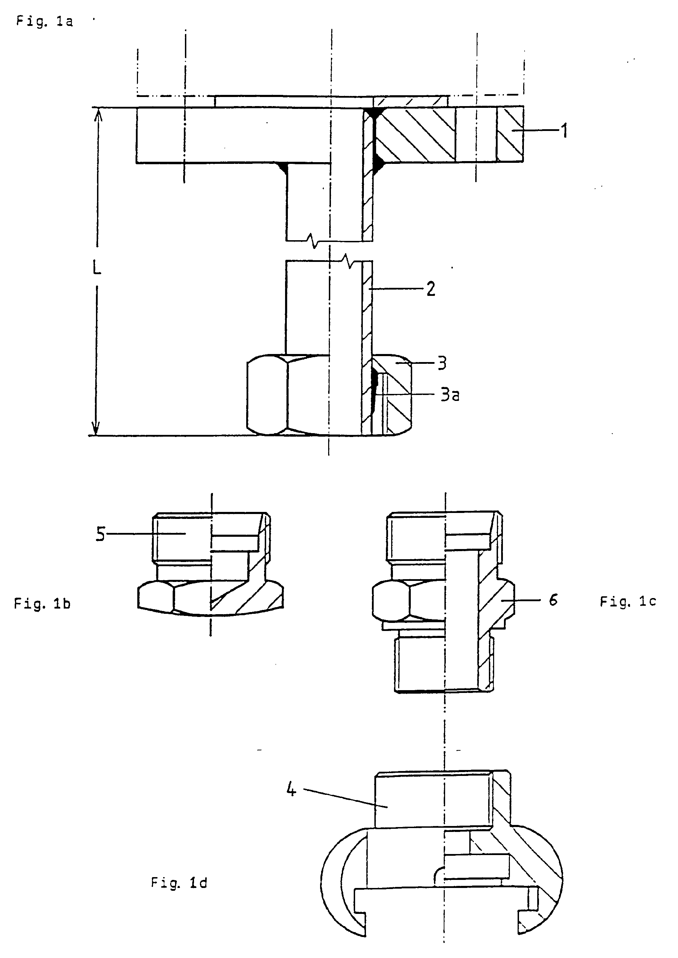

- Figur 1a: zeigt das Universalanschlußflanschstück in einer Seitenansicht. Die Ziffer 1 bezeichnet den Flansch, die Ziffer 2 das Rohrstück, das im Flansch eingeschweißt ist, die Ziffer 3 die Überwurfmutter und Ziffer 3a den Schneidring.
- Figur 1b: zeigt einen Verschluß für das Rohrende 5 als Seitenansicht.
- Figur 1c: zeigt eine gerade Einschraubverschraubung , die zur Überbrückung des Adapterstückes 4 in Fig. 1d und des Anschlußflanschstückes 1 in Fig. 1a dient.
- Figur 1d: zeigt ein Dampf-/Wasser-/Luft- Adapterstück bzw. ein N2-Adapterstück 4.

### Bezugszeichenliste

- 1: Anschlußflansch
- 2: Rohrstück
- 3: Überwurfmutter mit Schneidring
- 3a: Schneidring
- 4: Dampf-/Wasser-/Luft-Adapterstück, N₂-Adapterstück
- 5: Blindstopfen
- 6: Gerade Einschraubverschraubung

## Patentansprüche

1. Anschlußflanschstück für Prozeßanlagen bestehend aus einem Flansch, einem Rohrstück, das mit dem einen Ende am Flansch befestigt ist, und einem Befstigungsmittel, das an dem anderen Ende des Rohrstückes angeordnet ist, zur paßgenauen Befestigung von Adapterstücken mit unterschiedlicher Funktion.

2. Anschlußflanschstück nach Anspruch 1, **dadurch gekennzeichnet, daß** das eine Ende des Rohrstückes im Flansch eingeschweißt ist.

3. Anschlußflanschstück nach Anspruch 1 oder 2, **dadurch gekennzeichnet, daß** zur Befestigung von Adapterstücken an dem anderen Ende des Rohrstückes eine Überwurfmutter mit Schneidring angeordnet ist.

4. Anschlußflanschstück nach Anspruch 1 bis 3, **dadurch gekennzeichnet, daß** ein Dampf/Wasser/Luft-Adapterstück an dem anderen Ende des Rohrstückes befestigt ist.

5. Anschlußflanschstück nach Anspruch 1 bis 3, **dadurch gekennzeichnet, daß** ein Blindstopfen-Adapterstück an dem anderen Ende des Rohrstückes befestigt ist.

6. Anschlußflanschstück nach Anspruch 1 bis 3, **dadurch gekennzeichnet, daß** ein Stickstoff-Adapterstück an dem anderen Ende des Rohrstückes befestigt ist.
